# FASCICULE DE BREVET EUROPEEN

(11) **EP 3 776 066 B1**
(45) Date de publication et mention de la délivrance du brevet: **27.03.2024**
(21) Numéro de dépôt: 19710745.1
(22) Date de dépôt: 14.02.2019
(51) Int. Cl.: G02C 5/22

(54) **CHARNIERE DE LUNETTES BISTABLE**
BISTABILES BRILLENGELENK
BISTABLE SPECTACLES KNUCKLE

(30) Priorité: 30.03.2018 FR 1852843
(43) Date de publication de la demande: 17.02.2021
(73) Titulaire: Luxottica S.r.l., 32021 Agordo, (Belluno) (IT)
(72) Inventeur: Guerin, Christophe, 59000 Lille (FR); Plazy, Jérémie, 38140 Renage (FR)
(74) Mandataire: Modiano, Micaela Nadia
(86) Numéro de dépôt international: PCT/FR2019/050332
(87) Numéro de publication internationale: WO 2019/186001

(56) Documents cités:
- WO-A1-92/15916
- WO-A1-2017/216328
- FR-A1- 2 698 121
- US-A- 5 596 789
- US-A1- 2005 270 478
- US-A1- 2012 127 423
- US-A1- 2015 085 244

## Description

### Domaine de l'invention

La présente invention concerne des lunettes du type constituées par une façade optique ou solaire et deux branches, chacune d'elles étant reliée à la façade par l'intermédiaire d'une articulation élastique. Ce type d'articulation procure un effet bistable de la branche, ayant pour conséquence de la maintenir en position d'ouverture ou de fermeture, sans osciller librement de l'une à l'autre comme c'est le cas avec une articulation classique.

Ce système permet également de compenser une ouverture trop importante des branches, et ainsi éviter la rupture de celle-ci ou une déformation plastique.

### Etat de la technique

On connaît dans l'état de la technique une solution décrite dans le brevet européen EP1376201, concernant une paire de lunettes munie de charnières élastiques qui raccordent chacune une face de lunettes à une branche de lunettes respective. La charnière élastique comprend un bloc en élastomère élastique pouvant fléchir entre deux positions écartées d'environ 90°. La charnière élastique se raccorde à chacune des extrémités au moyen d'une nervure de rétention qui s'engage dans une rainure correspondante de la première branche de lunettes ou de la face de lunettes.

On connaît aussi une solution décrite dans le brevet français FR2959573 concernant des lunettes constituées par une façade optique ou solaire comprenant deux branches chacune d'elles étant reliée à la monture. L'articulation est constituée par un élément monobloc plein élastiquement déformable interposé entre une extrémité de la branche et une extrémité en vis-à-vis du tenon, par l'intermédiaire de moyens de liaison.

La demande de brevet internationale WO9215916 décrit un autre exemple de charnière pour les branches d'une monture de lunettes et autres comprenant des éléments de charnière coniques convexe et concave qui s'emboîtent et sont maintenus en contact par des éléments élastiques allongés permettant un mouvement relatif des éléments de charnière lorsqu'ils sont sollicités et ramènent les éléments à leur position normale de contact lorsque la sollicitation cesse.

La demande de brevet US2015085244 décrit une monture de lunettes avec un système de fixation mettant un oeuvre un corps métallique renflé de type «stemball » (nom commercial).

La demande de brevet US2005/270478 concerne un ensemble charnières pour lunettes, dans lequel un premier élément structurel pour la structure charnière est formé dans une première étape de moulage et un second élément structurel de la structure charnière est formé directement sur une partie du premier élément structurel dans une seconde étape de moulage. L'invention utilise des techniques d'assemblage dans le moule pour réduire les étapes d'assemblage nécessaires pour former ledit ensemble charnière, ce qui permet de créer un ensemble charnière qui présente un ajustage et une utilité améliorés. De manière plus spécifique, les composants surmoulés forment un joint de type emboîtement, et une bille, ce qui augmente le degré de rotation latérale dans un sens et permet une liberté limitée dans un second sens.

La demande de brevet US2012127423 concerne un autre exemple connu de lunettes présentant une articulation avec un lien élastique.

Le brevet US5596789 décrit une charnière permettant de l'assembler rapidement et simplement aux parties constituant la paire de lunettes afin de permettre meilleure industrialisation. Cette charnière de l'art antérieur n'est aucunement bistable.

La figure 11 représente une variante comprenant un corps rigide muni de deux rotules venant se loger dans des pièces complémentaires insérées dans le bras d'une part et la face d'autre part.

Ces pièces sont déformables latéralement pour permettre un engagement par clipsage dans les cavités de réception prévues dans le bras et la face, et pas selon l'axe du corps rigide.

WO2017216328 décrit une charnière bi-stable.

### Inconvénients de l'art antérieur

Les solutions de l'art antérieur sont basées sur la déformation élastique d'un élément plastique soumis à un effort de torsion. Ce mode de déformation provoque une fatigue rapide de l'élément plastique, qui perd dans un premier temps ses caractéristiques élastiques avec un allongement non réversible produisant un jeu dans l'articulation. Dans un deuxième temps, cette fatigue du matériau provoque la rupture.

Par ailleurs, l'assemblage de telles montures n'est pas aisé car il faut mettre l'élément élastique sous tension au moment de l'assemblage, ce qui implique des manipulations délicates.

L'invention concerne une solution de charnière bistable avec un corps déformable élastiquement et une structure de cages de réception des extrémités de ce corps élastique ne correspondant pas à l'enseignement de D1.

### Solution apportée par l'invention

Pour répondre à ces inconvénients, l'invention concerne selon son acception la plus générale un élément de charnière bistable pour monture de lunettes comme défini dans le jeu de revendications. •

Selon des variantes avantageuses, l'invention concerne aussi un élément de charnière présentant une ou plusieurs caractéristiques additionnelles suivantes :
- le débattement entre la position ouverte et la position repliée est de 80° ± 5°,
- la hauteur, selon la direction perpendiculaire au plan de la fente, de la partie centrale dudit corps monolithique est comprise entre 80% et 100% de la hauteur desdits renflements,
- la largeur desdits renflements, selon la direction transversale, est comprise entre 1,5 et 2,5 fois la largeur de ladite partie centrale dudit corps monolithique,
- l'un au moins desdits renflements forme des joues latérales présentant un profil de révolution selon un axe perpendiculaire auxdites parois latérales,
- l'un au moins desdits renflements forment des joues latérales cylindriques,
- l'un au moins desdits renflements présentent une forme semi-sphérique,
- lesdits segments de guidage complémentaires sont partiellement incurvés.

L'invention concerne aussi une monture de lunette formée par une face et deux branches, les branches étant reliées à la face avec un élément de charnière conforme à l'invention.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue en perspective de la charnière selon l'invention, en découpe partielle, en position ouverte,
- la figure 2 représente une vue en perspective d'une variante de réalisation du corps élastique pour une telle charnière,
- la figure 3 représente une vue en perspective d'une cage faciale,
- la figure 4 représente une vue en perspective d'une cage brachiale,
- les figures 5 à 10 représentent la configuration de la charnière depuis l'étape d'insertion du corps élastique dans les cages jusqu'à l'ouverture complète.

### Description générale de la charnière

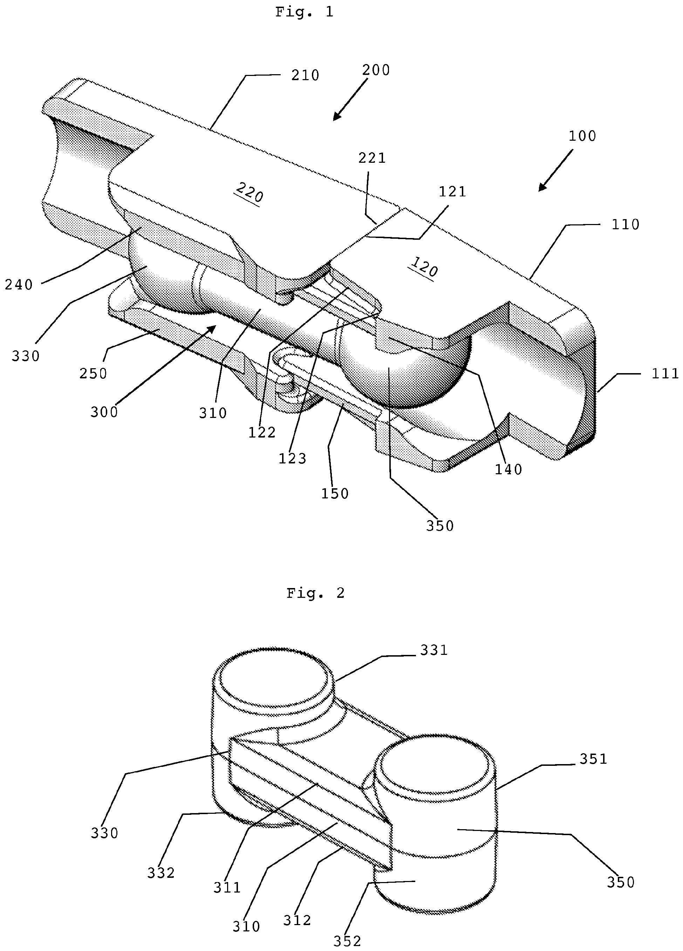

La figure 1 représente une vue d'ensemble de la charnière, en découpe partielle, en position ouverte. Elle est composée de trois composants :
- une cage faciale (100),
- une cage brachiale (200),
- un corps élastique (300).

Les deux cages (100, 200) sont constituées par des pièces métalliques, par exemple en un alliage de cuivre tel que du maillechort.

En position ouverte, l'axe longitudinal (110) du plan passant par le fond (111) de la cage faciale (100) forme, avec l'axe longitudinal (210) du plan passant par le fond de la cage faciale (200) un angle légèrement inférieur à 180°, typiquement 170°, de façon à ce que les branches de la monture soient légèrement « rentrante » et exerce une légère pression sur la tempe, pour assurer une bonne tenue.

Le corps élastique (300) est une pièce monolithique pleine en élastomère, par exemple du polyuréthanne présentant une dureté 95 shore A présentant une partie centrale (310) prolongée à chaque extrémité par un renflement (330, 350).

Selon cette première variante de réalisation d'un corps élastique, les extrémités (330, 350) présentent une forme hémisphérique, avec une partie centrale (310) de forme parallélépipédique arrondie.

Ce corps élastique (300) vient se loger dans la cavité définie à l'intérieur des deux cages (100, 200), et les renflements (330, 350) sont bloqués par des lèvres respectivement (140, 150 ; 240, 250) s'étendant dans des plans parallèles aux plans passant par les fonds (111, 211), et définissant entre leurs bords intérieurs une fente d'une largeur correspondant à la section transversale de la partie centrale (310) du corps élastique (300).

La hauteur du corps (300), selon l'axe vertical perpendiculaire au plan de la fente, est de préférence comprise entre 70% et 100% de la hauteur maximale, de manière à réduire la flexion de la partie centrale. La distance entre les barycentres des deux renflements (330, 350) est comprise entre 65% et 75% de la longueur total du corps (300), pour présenter une partie centrale courte et épaisse limitant également la flexion.

Les faces latérales (120, 220) des cages (100, 200) présentent des bords proximaux (121, 221) complémentaires formant des surfaces de glissement. La hauteur h_{faciale} du bord (121) de la cage faciale (100) est inférieure à la hauteur h_{brachiale} du bord (221) de la cage brachiale (200). Typiquement, h_{faciale} est compris entre 0,7 et 0,85 fois h_{brachiale}. La surface de glissement (121) de la cage faciale (100) est prolongée par une surface de glissement (122), s'étendant à 100° de la surface de glissement (121), et présentant une longueur correspondant sensiblement à la hauteur h_{faciale} du bord (121). Lors de la fermeture de la charnière, le bord (221) commence par glisser le long du bord (121), jusqu'à un point de pivotement où il continuer à glisser le long de la surface (122), jusqu'à arriver en butée contre l'arête (123) s'étendant sensiblement perpendiculairement à la surface de la surface de glissement (122).

### Vue en perspective d'un corps élastique

La figure 2 représente une vue en perspective d'une variante de réalisation du corps élastique pour une telle charnière. Selon cette variante de réalisation, les extrémités (330, 350) présentent une forme cylindrique, et la partie centrale (310) une forme sensiblement rectangulaire.

La largeur de partie centrale (310) est comprise entre 0,5 et 0,6 fois la largeur des extrémités (330, 350). Les extrémités (330, 350) présente ainsi, de part et d'autre de la partie centrale, des épaulements cylindriques (332 ; 351, 352) présentant une largeur d'environ 0,25 fois la largeur des épaulements cylindriques, formant une zone de pivotement dans les logements formés dans les cages (100, 200).

La partie centrale (310) présente à ces arêtes longitudinales des chanfreins (311, 312) facilitant le passage dans la fente des cages (100, 200). Bien sur, la partie centrale (310) présente utilement des chanfreins longitudinaux, quelle que soit la configuration des renflements (330, 350).

Ce corps élastique est sollicité, lors de l'ouverture ou de la fermeture, en traction et non pas en torsion, lors d'un usage normal, c'est-à-dire lors du repliement ou de la fermeture des branches ou du port des lunettes.

Néanmoins, lors d'un usage anormal, par exemple en cas de torsion des branches, le corps élastique peut absorber les déformations par une flexion occasionnelle du corps central.

### Vue détaillée des cages faciale et brachiale

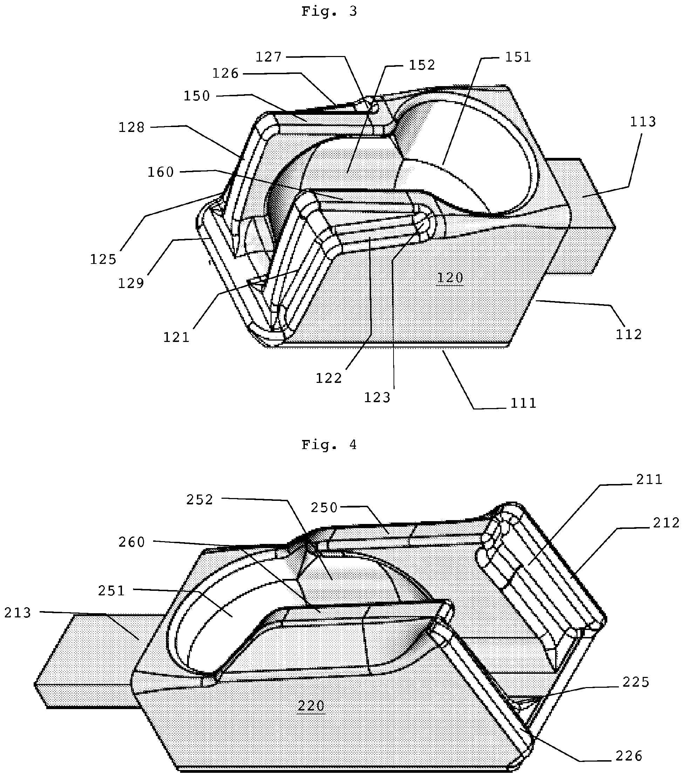

Les figures 3 et 4 représentent des vues détaillées en perspective des cages respectivement faciale et brachiale.

La face de la monture est fixée sur la surface avant (112), perpendiculaire à l'axe longitudinal, par exemple à l'aide d'un tenon (113).

La cage (100) présente sur la face opposée à la face avant (112) des glissières (121, 125) se prolongeant sur l'arête intérieure par des segments de glissières (122, 126) s'étendant perpendiculairement terminées par des butées (123, 127). Ces glissières sont bordées intérieurement par un rail (122, 128).

La face extérieure (111) est prolongée par un becquet (129).

La cage (100) présente une cavité (151) d'une section supérieure à celle du renflement (330) du corps élastique (300), débouchant dans une cavité arrière (152) s'ouvrant sur la face arrière par une ouverture présentant une section correspondant à la section de la partie centrale (310) du corps élastique (300).

La cavité arrière (152) présente une section correspondant à la section du renflement (330) du corps élastique (300), et est délimité par les deux lèvres (150, 160) délimitant une fente médiane d'une largeur correspondant à la largeur de la partie centrale (310) du corps élastique (300).

La cage brachiale (200) est montée dans le prolongement de la branche de la lunette, par exemple par un tenon (213). Elle présente à la face proximale deux glissières (211, 225) bordées par des rails (212, 226) complémentaires des glissières de la cage faciale (100).

On entend par « proximal » au sens du présent brevet le coté d'un cage le plus proche de la cage complémentaire.

Elle présente une cavité (251) d'une section supérieure à la section du renflement (350) du corps élastique (300), prolongé par une cavité (252) d'une section complémentaire à la section du renflement (350) du corps élastique (300) et fermée partiellement, à la face intérieure, par deux lèvres (250, 260) délimitant une fente médiane.

### Cinématique selon un premier exemple

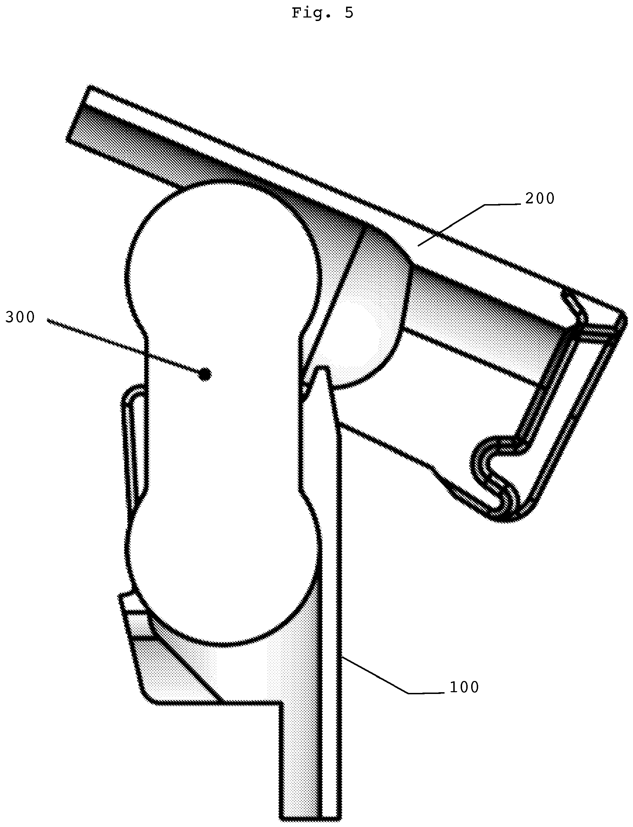

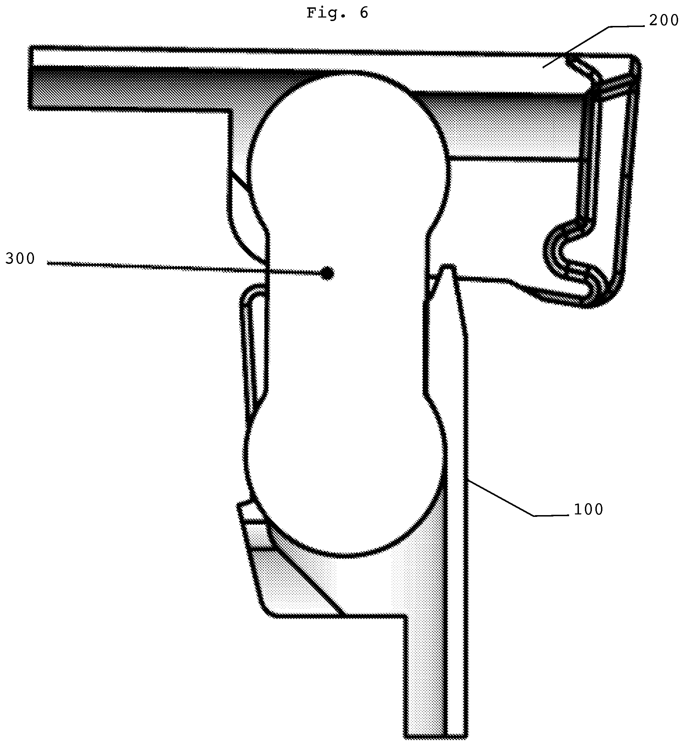

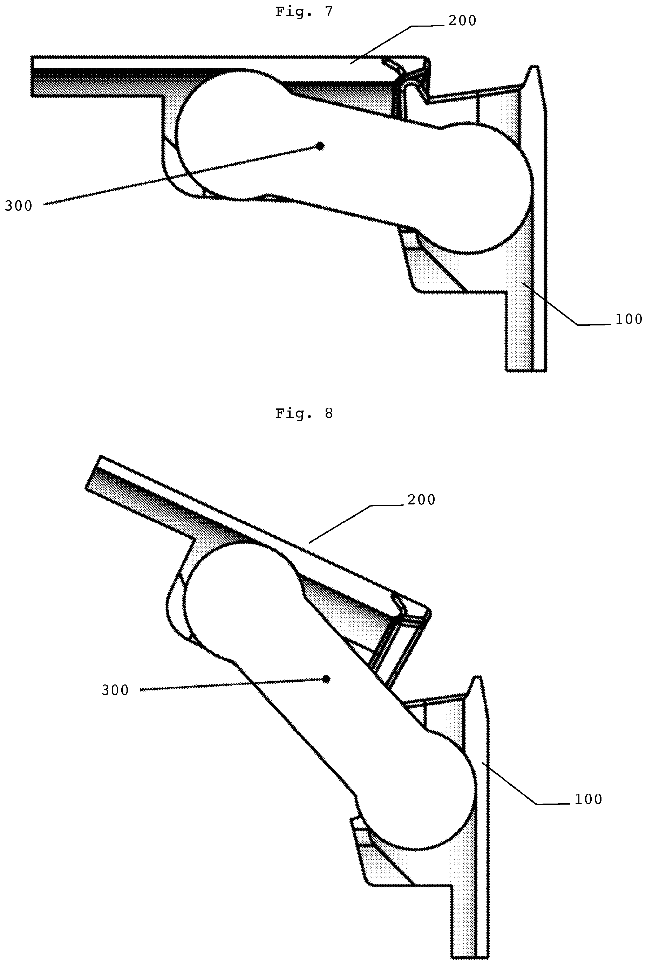

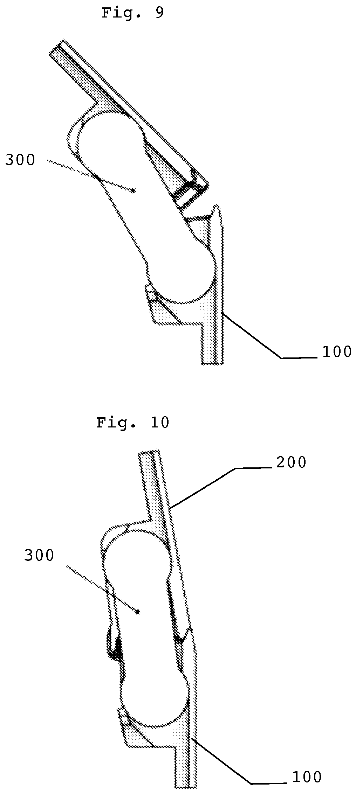

Ces figures 5 à 10 représentent la configuration de la charnière depuis l'étape d'insertion du corps élastique dans les cages jusqu'à l'ouverture complète.

### Mode de réalisation avec conduction électrique

Les éléments de charnière selon l'invention peuvent être adaptées pour assurer la transmission électrique entre chacune des branches et la face de la lunette.

A cet effet, le corps plein déformable présente un canal longitudinal pour le passage d'un ou de plusieurs conducteurs électriques, assurant la liaison électrique entre cage brachiale d'une part et la cage faciale d'autre part. La liaison peut être assurée par la métallisation d'une partie des renflements venant en contact avec la cage brachiale et/ou la cage faciale.

Elle peut aussi être réalisée par des saillies métalliques venant s'engager dans des ouvertures complémentaires formées des parois latérales longitudinales de la cage brachiale et/ou la cage faciale, la saillie métallique faciale étant reliées à la saillie métallique brachiale par un fil conducteur.

Le corps plein peut également être réalisé en un matériau chargé de fibres conductrices.

Il peut encore être réalisé par surmoulage d'un fil conducteur déformable longitudinalement.

## Revendications

1. - Elément de charnière bistable pour monture de lunettes, comprenant :
• une cage brachiale (200) présentant un fond (211) prolongé latéralement par deux parois latérales (220) longitudinales définissant un logement (251, 252) s'ouvrant sur la face transversale proximale (221) par une ouverture présentant une section en forme de U, lesdites parois latérales (220) présentant chacune une lèvre supérieure (250, 260) s'étendant depuis ladite face transversale proximale (221) jusqu'à une partie intermédiaire dudit logement, lesdites lèvres (240, 250) délimitant une fente dont la largeur correspond à la largeur de ladite ouverture en U,
• une cage faciale (100) présentant un fond (111) prolongé latéralement par deux parois latérales (120) longitudinales définissant un logement (151, 152) s'ouvrant sur la face transversale proximale (121) par une ouverture présentant une section en forme de U, lesdites parois latérales (120) présentant chacune une lèvre supérieure (150, 160) s'étendant depuis ladite face transversale proximale (121) jusqu'à une partie intermédiaire dudit logement, lesdites lèvres (150, 160) délimitant une fente dont la largeur correspond à la largeur de ladite ouverture en U,
• lesdites faces proximales (121, 221) présentant des segments de glissières (121, 125, 211, 225) de guidage complémentaires, perpendiculaires au plan de ladite fente, lesdits segments de glissières (121, 125) de guidage de la cage faciale (100) étant prolongés sur la surface desdites lèvres (150, 160) par des segments de glissières (122, 126) de guidage s'étendant de part et d'autre de ladite fente, sur une longueur correspondant à la hauteur de la face proximale de la cage brachiale (220),
• un corps plein (300) déformable élastiquement selon l'axe longitudinal, présentant une partie centrale (310), d'une section correspondant à la section transversale desdites ouvertures en forme de U, prolongée à chaque extrémité par un renflement (330, 350) d'une section complémentaire à la section transversale desdits logements des cages brachiale (200) et faciale (100).

2. - Elément de charnière bistable selon la revendication 1 **caractérisé en ce que** le débattement entre la position ouverte et la position repliée est de 80° ± 5°.

3. - Elément de charnière bistable selon la revendication 1 **caractérisé en ce que** la hauteur, selon la direction perpendiculaire au plan de la fente, de la partie centrale (310) dudit corps (300) plein lequel est une pièce monolithique est comprise entre 80% et 100% de la hauteur desdits renflements (330, 350).

4. - Elément de charnière bistable selon la revendication 1 **caractérisé en ce que** la largeur desdits renflements, selon la direction transversale, est comprise entre 1,5 et 2,5 fois la largeur de ladite partie centrale (310) dudit corps plein (300) lequel est une pièce monolithique.

5. - Elément de charnière bistable selon la revendication 1 **caractérisé en ce que** l'un au moins desdits renflements (330, 350) forme des joues latérales présentant un profil de révolution selon un axe perpendiculaire auxdites parois latérales (120, 220).

6. - Elément de charnière bistable selon la revendication 1 **caractérisé en ce que** l'un au moins desdits renflements (330, 350) forment des joues latérales cylindriques (331, 332, 351, 352).

7. - Elément de charnière bistable selon la revendication 1 **caractérisé en ce que** l'un au moins desdits renflements (330, 350) présentent une forme semi-sphérique.

8. - Élément de charnière bistable selon la revendication 1 **caractérisé en ce que** lesdits segments de guidage complémentaires (121, 125, 211, 225) sont partiellement incurvés.

9. . Élément de charnière bistable selon l'une quelconque des revendications précédentes, **caractérisé en ce que** lesdits segments de glissières (122, 126) de guidage s'étendant de part et d'autre de ladite fente sont bordées intérieurement par un rail (122, 128) et sont terminées par des butées (123, 127).

10. . Élément de charnière bistable selon la revendication 9, **caractérisé en ce que** lesdites parois latérales (120, 220) des cages (100, 200) présentent des bords proximaux (121, 221) complémentaires formant des surfaces de glissement (121, 122), la hauteur du bord proximal (121) de la cage faciale (100) étant inférieure à la hauteur du bord proximal (221) de la cage brachiale (200).

11. . Élément de charnière bistable selon la revendication 10, **caractérisé en ce que** ladite surface de glissement (121) de la cage faciale (100) est prolongée par ladite surface de glissement (122) s'étendant à 100° de ladite surface de glissement (121) et présentant une longueur correspondant sensiblement à la hauteur du bord proximal (121) de la cage faciale (100).

12. . Élément de charnière bistable selon la revendication 10 ou 11, **caractérisé en ce qu'**il est configuré de manière telle que, lors de la fermeture de la charnière, ledit bord proximal (221) de la cage brachiale commence par glisser le long du bord proximal (121) de la cage faciale, jusqu'à un point de pivotement où il continuer à glisser le long de ladite surface de glissement (122), jusqu'à arriver en butée contre la butée (123, 127) s'étendant sensiblement perpendiculairement à la surface de ladite surface de glissement (122).

13. . Monture de lunette formée par une face et deux branches, les branches étant reliées à la face avec un élément de charnière conforme à l'une au moins des revendications précédentes.

14. . Monture de lunette selon la revendication précédente **caractérisé en ce que** le corps plein (300) déformable desdits éléments de charnière présente un canal longitudinal pour le passage d'un ou de plusieurs conducteurs électriques, assurant la liaison électrique entre cage brachiale d'une part et la cage faciale d'autre part.

## Patentansprüche

1. Bistabiles Scharnierelement für ein Brillengestell, umfassend:
• ein bügelseitiges Gehäuse (200), das einen Boden (211) aufweist, der seitlich durch zwei Längsseitenwände (220) verlängert wird, die eine Aufnahme (251, 252) definieren, die sich auf die proximale Querseite (221) über eine Öffnung, die einen U-förmigen Querschnitt aufweist, öffnet, wobei die Seitenwände (220) jeweils eine obere Lippe (250, 260) aufweisen, die sich von der proximalen Querseite (221) bis zu einem Zwischenteil der Aufnahme erstreckt, wobei die Lippen (240, 250) einen Spalt abgrenzen, dessen Breite der Breite der U-förmigen Öffnung entspricht,
• ein vorderseitiges Gehäuse (100), das einen Boden (111) aufweist, der seitlich von zwei Längsseitenwänden (120) verlängert wird, die eine Aufnahme (151, 152) definieren, die sich auf die proximale Querseite (121) über eine Öffnung, die einen U-förmigen Querschnitt aufweist, öffnen, wobei die Seitenwände (120) jeweils eine obere Lippe (150, 160) aufweisen, die sich von der proximalen Querseite (121) bis zu einem Zwischenteil der Aufnahme erstreckt, wobei die Lippen (150, 160) einen Spalt abgrenzen, dessen Breite der Breite der U-förmigen Öffnung entspricht,
• wobei die proximalen Seiten (121, 221) komplementäre Gleitführungssegmente (121, 125, 211, 225) aufweisen, die zur Ebene des Spalts rechtwinklig sind, wobei die Gleitführungssegmente (121, 125) des vorderseitigen Gehäuses (100) auf der Oberfläche der Lippen (150, 160) durch Gleitführungssegmente (122, 126) verlängert sind, die sich auf beiden Seiten des Spalts über eine Länge erstrecken, die der Höhe der proximalen Seite des bügelseitigen Gehäuses (220) entsprechen
• einen Vollkörper (300), der entlang der Längsachse elastisch verformbar ist und einen mittleren Teil (310) aufweist, mit einem Querschnitt, der dem Querschnitt der U-förmigen Öffnungen entspricht, der an jedem Ende durch eine Verdickung (330, 350) mit einem Querschnitt, der zu dem Querschnitt der Aufnahmen des bügelseitigen (200) und des vorderseitigen (100) Gehäuses komplementär ist, verlängert ist.

2. Bistabiles Scharnierelement nach Anspruch 1, **dadurch gekennzeichnet, dass** der Ausfederungsweg zwischen der offenen Position und der zusammengeklappten Position 80° ± 5° beträgt.

3. Bistabiles Scharnierelement nach Anspruch 1, **dadurch gekennzeichnet, dass** die Höhe in der Richtung, die zur Ebene des Spalts rechtwinklig ist, des mittleren Teils (310) des Vollkörpers (300), welcher ein einstückiges Teil ist, zwischen 80% und 100% der Höhe der Verdickungen (330, 350) liegt.

4. Bistabiles Scharnierelement nach Anspruch 1, **dadurch gekennzeichnet, dass** die Breite der Verdickungen in der Querrichtung zwischen 1,5- und 2,5mal die Breite des mittleren Teils (310) des Vollkörpers (300), welcher ein einstückiges Teil ist, liegt.

5. Bistabiles Scharnierelement nach Anspruch 1, **dadurch gekennzeichnet, dass** mindestens eine der Verdickungen (330, 350) Seitenwangen bildet, die ein Rotationsprofil um eine Achse, die zu den Seitenwänden (120, 220) rechtwinklig ist, aufweisen.

6. Bistabiles Scharnierelement nach Anspruch 1, **dadurch gekennzeichnet, dass** mindestens eine der Verdickungen (330, 350) zylindrische Seitenwangen (331, 332, 351, 352) bildet.

7. Bistabiles Scharnierelement nach Anspruch 1, **dadurch gekennzeichnet, dass** mindestens eine der Verdickungen (330, 350) halbkugelförmig ist.

8. Bistabiles Scharnierelement nach Anspruch 1, **dadurch gekennzeichnet, dass** die komplementären Gleitführungssegmente (121, 125, 211, 225) teilweise gekrümmt sind.

9. Bistabiles Scharnierelement nach einem der vorhergehenden Ansprüche, **dadurch gekennzeichnet, dass** die Gleitführungssegmente (122, 126), die sich auf beiden Seiten des Spalts erstrecken, innen von einer Schiene (122, 128) umrandet sind und in Anschlägen (123, 127) enden.

10. Bistabiles Scharnierelement nach Anspruch 9, **dadurch gekennzeichnet, dass** die Seitenwände (120, 220) der Gehäuse (100, 200) komplementäre proximale Ränder (121, 221) aufweisen, die Gleitflächen (121, 122) bilden, wobei die Höhe des proximalen Randes (121) des vorderseitigen Gehäuses (100) kleiner als die Höhe des proximalen Randes (221) des bügelseitigen Gehäuses (200) ist.

11. Bistabiles Scharnierelement nach Anspruch 10, **dadurch gekennzeichnet, dass** die Gleitfläche (121) des vorderseitigen Gehäuses (100) durch die Gleitfläche (122) verlängert ist, die sich um 100° von der Gleitfläche (121) aus erstreckt und eine Länge aufweist, die im Wesentlichen der Höhe des proximalen Randes (121) des vorderseitigen Gehäuses (100) entspricht.

12. Bistabiles Scharnierelement nach Anspruch 10 oder 11, **dadurch gekennzeichnet, dass** es derart konfiguriert ist, dass beim Schließen des Scharniers der proximale Rand (221) des bügelseitigen Gehäuses zunächst entlang des proximalen Randes (121) des vorderseitigen Gehäuses bis zu einem Schwenkpunkt gleitet, an dem er weiter entlang der Gleitfläche (122) gleitet, bis er an dem Anschlag (123, 127) zur Anlage kommt, der sich im Wesentlichen rechtwinklig zur Oberfläche der Gleitfläche (122) erstreckt.

13. Brillengestell, das durch eine Vorderseite und zwei Bügel gebildet wird, wobei die Bügel mit der Vorderseite über ein Scharnierelement nach mindestens einem der vorhergehenden Ansprüche verbunden sind.

14. Brillengestell nach dem vorhergehenden Anspruch, **dadurch gekennzeichnet, dass** der verformbare Vollkörper (300) der Scharnierelemente einen Längskanal für den Durchgang eines oder mehrerer elektrischer Leiter aufweist, welche die elektrische Verbindung zwischen dem bügelseitigen Gehäuse einerseits und dem vorderseitigen Gehäuse andererseits sicherstellen.

## Claims

1. - A bistable hinge element for an eyeglasses frame, comprising:
• an arm cage (200) having a bottom (211) extended laterally by two longitudinal side walls (220) which define a housing (251, 252) that opens onto the proximal transverse face (221) through an opening that is U-shaped in cross-section, each one of said side walls (220) having an upper lip (250, 260) extending from said proximal transverse face (221) to an intermediate portion of said housing, said lips (240, 250) delimiting a gap whereof the width corresponds to the width of said U-shaped opening,
• a front cage (100) having a bottom (111) which is extended laterally by two longitudinal side walls (120) which define a housing (151, 152) that opens onto the proximal transverse face (121) through an opening that is U-shaped in cross-section, each one of said side walls (120) having an upper lip (150, 160) which extends from said proximal transverse face (121) to an intermediate portion of said housing, said lips (150, 160) delimiting a gap whereof the width corresponds to the width of said U-shaped opening,
• said proximal faces (121, 221) having complementary guiding slider segments (121, 125, 211, 225), which are perpendicular to the plane of said gap, said guiding slider segments (121, 125) of the front cage (100) being extended on the surface of said lips (150, 160) by guiding slider segments (122, 126) that extend from one side to the other of said gap, over a length that corresponds to the height of the proximal face of the arm cage (200),
• a solid body (300) that is elastically deformable along the longitudinal axis, and which has a central portion (310), with a cross-section corresponding to the transverse cross-section of said U-shaped openings, which is extended at each end by a bulge (330, 350) of a cross-section that is complementary to the transverse cross-section of said housings of the arm (200) and front (100) cages.

2. - The bistable hinge element according to claim 1, **characterized in that** the displacement between the open position and the folded position is 80°±5°.

3. - The bistable hinge element according to claim 1, **characterized in that** the height, along the direction perpendicular to the plane of the gap, of the central portion (310) of said solid body (300), which is a monolithic part, is comprised between 80% and 100% of the height of said bulges (330, 350).

4. - The bistable hinge element according to claim 1, **characterized in that** the width of said bulges, along the transverse direction, is comprised between 1.5 and 2.5 times the width of said central portion (310) of said solid body (300), which is a monolithic part.

5. - The bistable hinge element according to claim 1, **characterized in that** the at least one of said bulges (330, 350) forms side bumps that have a profile of revolution about an axis that is perpendicular to said side walls (120, 220).

6. - The bistable hinge element according to claim 1, **characterized in that** the at least one of said bulges (330, 350) forms cylindrical side bumps (331, 332, 351, 352).

7. - The bistable hinge element according to claim 1, **characterized in that** the at least one of said bulges (330, 350) has a hemispherical shape.

8. - The bistable hinge element according to claim 1, **characterized in that** said complementary guiding segments (121, 125, 211, 225) are partially curved.

9. - The bistable hinge element according to any one of the preceding claims, **characterized in that** said guide slider segments (122, 126) extending on either side of said gap are inwardly bordered by a rail (122, 128) and terminate in stops (123, 127).

10. - The bistable hinge element according to claim 9, **characterized in that** said side walls (120, 220) of the cages (100, 200) have complementary proximal edges (121, 221) forming sliding surfaces (121, 122), the height of the proximal edge (121) of the front cage (100) being less than the height of the proximal edge (221) of the arm cage (200).

11. - The bistable hinge element according to claim 10, **characterized in that** said sliding surface (121) of the front cage (100) is extended by said sliding surface (122) extending at 100° of said sliding surface (121) and having a length substantially corresponding to the height of the proximal edge (121) of the front cage (100).

12. - The bistable hinge element according to claim 10 or 11, **characterized in that** it is configured such that, when the hinge is closed, said proximal edge (221) of the arm cage begins by sliding along the proximal edge (121) of the front cage, up to a pivot point where it continues to slide along said sliding surface (122), until it comes into abutment against the stop (123, 127) extending substantially perpendicularly to the surface of said sliding surface (122).

13. - An eyeglasses frame made up of a front and two arms, the arms being folded to the front with a hinge element according to any one of the preceding claims.

14. - The eyeglasses frame according to the preceding claim, wherein the deformable solid body (300) of said hinge elements has a longitudinal channel for the passage of one or more electrical conductors, ensuring the electrical connection between the arm cage at one end and the front cage at the other.
